# EUROPÄISCHE PATENTSCHRIFT

(11) **EP 4 616 080 B1**
(45) Veröffentlichungstag und Bekanntmachung des Hinweises auf die Patenterteilung: **15.07.2026**
(21) Anmeldenummer: 23790231.7
(22) Anmeldetag: 10.10.2023
(51) Int. Cl.: F16C 33/10, F16C 33/66

(54) **LAGERANORDNUNG**
BEARING ASSEMBLY
ENSEMBLE PALIER

(30) Priorität: 10.11.2022 DE 102022129717
(43) Veröffentlichungstag der Anmeldung: 17.09.2025
(73) Patentinhaber: Schaeffler Technologies AG & Co. KG, 91074 Herzogenaurach (DE)
(72) Erfinder: HENTSCHKE, Christoph, 90471 Nürnberg (DE); PLOGMANN, Michael, 91074 Herzogenaurach (DE); LEISTER, Tim, 91074 Herzogenaurach (DE)
(74) Vertreter: Schaeffler Technologies
(86) Internationale Anmeldenummer: PCT/DE2023/100754
(87) Internationale Veröffentlichungsnummer: WO 2024/099499

(56) Entgegenhaltungen:
- WO-A1-2007/107497
- DE-A1- 3 044 197
- DE-T2- 60 218 785

## Beschreibung

Die vorliegende Erfindung betrifft eine Lageranordnung, insbesondere für eine Windkraftanlage, umfassend eine Welle, welche in wenigstens einem ersten Lager drehbar gelagert ist, wobei die Welle zumindest abschnittsweise in einen mit einem Hydraulikfluid gefüllten Hydrauliksumpf eintaucht.

Heutzutage werden üblicherweise Wälzlager zur Rotorlagerung in Windkraftanlagen verwendet. Es wurde jedoch bereits auch die Verwendung von Gleitlagerungen für derartige Rotoren vorgeschlagen, wie beispielsweise in DE 102 55 745 A1.

Auch ist die Verwendung von Gleitlagerungen im Bereich der Übersetzungsgetriebe für Windkraftanlagen grundsätzlich vorbekannt, wie in der EP 1 184 567 A2 gezeigt. Ein weiteres Einsatzgebiet von Gleitlagern in Windkraftanlagen kann auch ein Turmdrehkranzlager sein, wie es auch aus der DE 100 43 936 A1 bekannt ist. Ferner ist es auch bekannt, Gleitlager für die Lagerung der Rotorblätter einer Windkraftanlage zu verwenden, wie es beispielsweise aus der DE 10 2005 051 912 A1 hervorgeht.

Allen möglichen Anwendungen von Gleitlagern innerhalb einer Windkraftanlage ist gemein, dass eine ausreichende und sichere Schmierung für die Langlebigkeit und Betriebssicherheit derartiger Gleitlager von wesentlicher Bedeutung sind. Der üblicherweise zur Schmierung der Gleitlager notwendige Öldruck bzw. Volumenstrom wird hierzu in de Regel über eine elektrische Pumpe (z.B. Zahnradpumpe) bereitgestellt. Bei einem Stromausfall kann es dann zu einem Ausfall der Schmierung und nachfolgend des Gleitlagers kommen, was regelmäßig unerwünscht ist.

Aus anderen Anwendungsgebieten außerhalb der Windkraft sind auch hydrodynamische Gleitlager bekannt, welche als "eigengeschmierte" Gleitlager ohne Ölpumpe auskommen können. Beispiele hierfür finde sich u.a. in der US568756, US1193471 oder der DE19546974B4. Meist werden hierbei Fest- oder Losschmierringe verwendet, die das Schmieröl durch Benetzung mitnehmen, welches dann an anderer Stelle im Gleitlager abgestreift wird. Diese Ansätze sind aber aufgrund der geringen Drehzahlen im Hauptrotor der Windkraftanlage nicht oder nur schlecht umzusetzen. Ferner erlauben diese Ausführungsvarianten keinen nennenswerten Druckaufbau, was jedoch für einen Einsatz innerhalb einer Windkraftanlage regelmäßig notwendig wäre. DE 30 44 197 A1 offenbart eine gattungsgemäße Lageranordnung.

Es ist daher die Aufgabe der Erfindung die aus dem Stand der Technik bekannten Probleme zu vermeiden oder zumindest zu verringern und eine Lageranordnung, insbesondere für eine Windkraftanlage bereitzustellen, welche eine besonders sichere und von einer elektrischen Pumpe unabhängige Schmierung der zueinander beweglichen Lagerteile realisiert.

Die Aufgabe der Erfindung wird gelöst durch eine Lageranordnung, insbesondere für eine Windkraftanlage, umfassend eine Welle, welche in wenigstens einem ersten Lager drehbar gelagert ist, wobei die Welle zumindest abschnittsweise in einen mit einem Hydraulikfluid gefüllten Hydrauliksumpf eintaucht, wobei innerhalb des Hydrauliksumpfs eine Hydraulikfördereinrichtung angeordnet ist, welche eine im Wesentlichen ebene Kontur aufweist, die mit einer Stirnseite der im Querschnitt kreisförmigen Welle einen Hydraulikkanal zwischen der Kontur der Hydraulikfördereinrichtung und der im Betrieb in einer Drehrichtung rotierenden Welle ausbildet, wobei der Hydraulikkanal einen in Drehrichtung der rotierenden Welle liegenden Kanaleingang und einen dem Kanaleingang in Drehrichtung nachfolgenden Kanalausgang aufweist, und zwischen dem Kanaleingang und dem Kanalausgang ein von der Kontur ausgehender, sich durch die Hydraulikfördereinrichtung erstreckender Druckkanal ausgebildet ist, so dass im Betrieb der Lageranordnung das Hydraulikfluid über den Druckkanal aus dem Hydrauliksumpf förderbar ist.

Hierdurch wird u.a. der Vorteil erzielt, dass eine zuverlässige Ölschmierung bereitgestellt werden kann, ohne dass beispielsweise auf eine elektrisch angetriebene Pumpe zurückgegriffen werden muss, so dass durch den Verzicht auf eine traditionelle Ölpumpe auch auf eine Vielzahl an beweglichen, verschleißbehafteten mechanischen Teilen verzichtet werden kann.

Im Vergleich zu den bislang üblichen Schmierölpumpen, ist die Hydraulikfördereinrichtung der erfindungsgemäßen Lageranordnung äußerst zuverlässig und nahezu verschleißfrei.

Eine Grundidee der Erfindung ist es, diesen Effekt des hydrodynamischen Druckaufbaus zu nutzen und damit das Hydraulikfluid druckzubeaufschlagen, jedoch nicht zwangsläufig zum Tragen von Last, sondern um das Hydraulikfluid insbesondere aus der Druckzone abzuleiten und zur Schmierung innerhalb oder auch außerhalb der Lageranordnung zu nutzen.

Insbesondere ist die Hydraulikfördereinrichtung daher ein von einem Lager der Lageranordnung separates Bauelement. Grundsätzlich wäre es aber auch denkbar, dass die Hydraulikfördereinrichtung beispielsweise mit einem bzw. innerhalb eines Gleitlagers der Lageranordnung ausgebildet ist. Die Hydraulikfördereinrichtung kann insbesondere auch als ein sogg. Gleitlager-Pad konfiguriert sein.

Das durch die Hydraulikfördereinrichtung geförderte Hydraulikfluid kann zur Schmierung eines Gleitlagers und/oder Wälzlagers der Lageranordnung verwendet werden.

Die Hydraulikfördereinrichtung ist bevorzugt so konfiguriert, dass das druckbeaufschlagte Hydraulikfluid im Druckkanal einen Druck aufweist, der gegenüber dem Hydraulikfluid im Hydrauliksumpf erhöht ist.

Die Hydraulikfördereinrichtung kann insbesondere auch so ausgebildet sein, dass sie im Wesentlichen verschleißfrei betrieben werden kann. D.h. im Betrieb der Lageranordnung ist die rotierende Welle durch den Hydraulikkanal von der Hydraulikfördereinrichtung mechanisch beabstandet.

Die Hydraulikfördereinrichtung besitz einen Druckkanal mit einem Kanaleingang, der bevorzugt im Bereich der Druckzone positioniert ist, die sich im Betrieb der Lageranordnung in dem Hydraulikkanal aufbaut, damit das Hydraulikfluid aus dem Hydraulikkanal "abgezapft" und druckbeaufschlagt in den Druckkanal geleitet werden kann.

Hierdurch kann die Hydraulikfördereinrichtung dann selbst nicht mehr oder nur eingeschränkt am Tragen der Welle beteiligt sein, und wird daher bevorzugt als ein separates Bauelement der Lageranordnung ausgebildet.

Das erste Lager der erfindungsgemäßen Lageranordnung kann als Gleitlager oder Wälzlager ausgebildet sein.

Das Hydraulikfluid kann insbesondere ein Schmieröl und/oder ein Kühlöl sein.

Gemäß einer vorteilhaften Ausgestaltung der Erfindung kann vorgesehen sein, dass der Druckkanal im Bereich des Kanalausgangs angeordnet ist, was sich hinsichtlich der Druckbeaufschlagung des Hydraulikfluids als besonders günstig erwiesen hat.

Es kann gemäß einer weiteren bevorzugten Weiterentwicklung der Erfindung auch vorgesehen sein, dass die Hydraulikfördereinrichtung gegenüber der Welle derart kippbar gelagert ist, dass im Betrieb der Lageranordnung der Kanaleingang einen größeren Strömungsquerschnitt aufweisen kann als der Kanalausgang. Es kann hierdurch erreicht werden, dass ein besonders vorteilhafter Druckaufbau innerhalb des Hydraulikkanals ausgebildet werden kann.

Des Weiteren kann es gemäß einer ebenfalls vorteilhaften Ausgestaltung der Erfindung vorgesehen sein, dass die Hydraulikfördereinrichtung in radialer Richtung auf die Welle hin gerichtet mittels eines Federelements federkraftbeaufschlagt ist, was ebenfalls zu einem optimierten Druckaufbau im Hydraulikkanal und einer verbesserten Steuerung des Volumenstroms an Hydraulikfluid beitragen kann. Alternativ kann die Hydraulikfördereinrichtung in axialer Richtung auf die Welle hin gerichtet mittels eines Federelements federkraftbeaufschlagt sein.

Gemäß einer weiteren besonders bevorzugten Ausführungsform der Erfindung kann es vorgesehen sein, dass das Federelement auf der dem Kanalausgang zugewandten Seite einer Symmetrieachse der Kontur angeordnet ist, wodurch der Volumenstrom an Hydraulikfluid sowie die Druckbeaufschlagung des Hydraulikfluids noch genauer einstell- und steuerbar ist.

Des Weiteren kann die Erfindung auch dahingehend weiterentwickelt sein, dass die Hydraulikfördereinrichtung an ihrer Kontur eine sich in Axialrichtung erstreckende erste Nut aufweist, welche hydraulisch mit dem Druckkanal gekoppelt ist, was eine gesteuerte Abfuhr von druckbeaufschlagtem Hydraulikfluid aus dem Hydraulikkanal in den Druckkanal begünstigt. Alternativ kann die Hydraulikfördereinrichtung an ihrer Kontur eine sich in Radialrichtung erstreckende erste Nut aufweisen, welche hydraulisch mit dem Druckkanal gekoppelt ist.

In einer ebenfalls bevorzugten Ausgestaltungsvariante der Erfindung kann auch vorgesehen sein, dass die Hydraulikfördereinrichtung an ihrer Kontur eine sich in Tangentialrichtung erstreckende zweite Nut aufweist, welche hydraulisch mit der ersten Nut verbunden ist, was ebenfalls dazu beitragen kann den Volumenstrom an Hydraulikfluid zum Druckkanal hin zu optimieren.

Auch kann es vorteilhaft sein, die Erfindung dahingehend weiterzuentwickeln, dass der Kanaleingang und der Kanalausgang im Betrieb der Lageranordnung innerhalb des Hydrauliksumpfs liegen, was zu einer besonders sicheren Versorgung mit Hydraulikfluid beitragen kann.

Gemäß einer weiteren zu bevorzugenden Ausgestaltung des Erfindungsgegenstandes kann vorgesehen sein, dass die Lageranordnung eine Mehrzahl an Hydraulikfördereinrichtungen aufweist, was ebenfalls zu einer verbesserten Bereitstellung an druckbeaufschlagtem Hydraulikfluid beitragen kann. Insbesondere ist es bevorzugt, dass die Hydraulikfördereinrichtungen im Wesentlichen identisch ausgebildet sind, was durch einen hohen Grad an Gleichteiligkeit zu Kostenvorteilen führt.

Schließlich kann die Erfindung auch in vorteilhafter Weise dahingehend ausgeführt sein, dass das erste Lager der Lageranordnung ein Gleitlager ist, wobei das Gleitlager mittels des aus dem Hydrauliksumpf geförderten Hydraulikfluid geschmiert wird. In diesem Zusammenhang wird das aus dem Hydrauliksumpf geförderte Hydraulikfluid, insbesondere direkt, zu dem ersten Lager mit einer Eintrittsöffnung in Schwerkraftrichtung oberhalb des Hydrauliksumpfs geleitet.

Dabei ist die Druckbeaufschlagung des Hydraulikfluids durch die Hydraulikfördereinrichtung so eingestellt, dass der entsprechende Höhenunterschied und die auftretenden Druckverluste in den entsprechenden Hydraulikleitungen überwunden werden.

Nachfolgend wird die Erfindung anhand von Figuren ohne Beschränkung des allgemeinen Erfindungsgedankens näher erläutert werden.

Es zeigt:
- Figur 1: eine Lageranordnung in einer Querschnittsansicht,
- Figur 2: eine Aufsicht auf eine Hydraulikfördereinrichtung,
- Figur 3: eine Längsschnittansicht einer ersten Ausführungsform einer Hydraulikfördereinrichtung,
- Figur 4: eine Längsschnittansicht einer zweiten Ausführungsform einer Hydraulikfördereinrichtung,
- Figur 5: eine erste Lageranordnung in einer Axialschnittdarstellung,
- Figur 6: eine zweite Lageranordnung in einer Axialschnittdarstellung,
- Figur 7: eine Windkraftanlage in einer schematischen Darstellung.

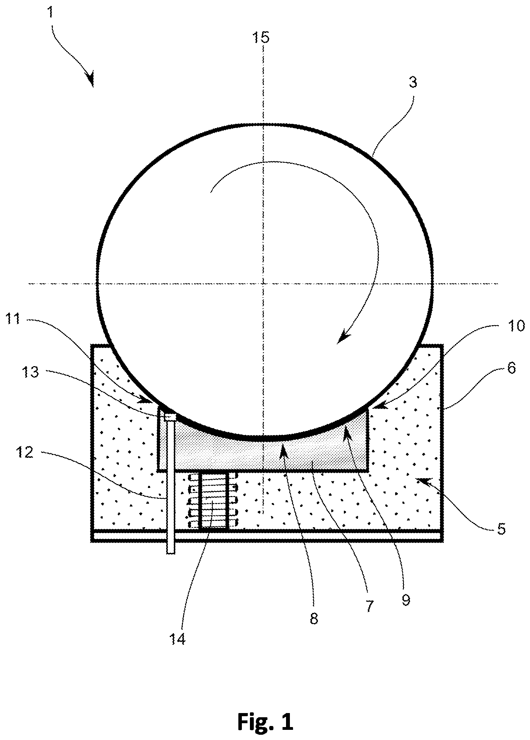

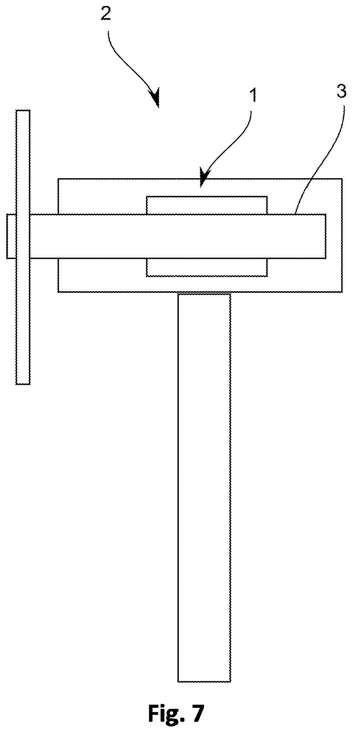

Die Figur 1 zeigt eine Lageranordnung 1 für eine Windkraftanlage 2, wie sie exemplarisch auch in der Figur 7 gezeigt ist. Die Lageranordnung 1 umfasst eine Welle 3, welche in wenigstens einem ersten Lager 4 drehbar gelagert ist, wobei die Welle 3 zumindest abschnittsweise in einen mit einem Hydraulikfluid 5 gefüllten Hydrauliksumpf 6 eintaucht.

Innerhalb des Hydrauliksumpfs 6 ist eine Hydraulikfördereinrichtung 7 angeordnet, welche im Querschnitt eine konkave kreisabschnittsförmige Kontur 8 aufweist, die mit der im Querschnitt kreisförmigen Welle 3 einen zylinderringförmigen Hydraulikkanal 9 zwischen der Kontur 8 der Hydraulikfördereinrichtung 7 und der im Betrieb in einer Drehrichtung rotierenden Welle 3 ausbildet. Der Hydraulikkanal 9 weist einen in Drehrichtung der rotierenden Welle 3 liegenden Kanaleingang 10 und einen dem Kanaleingang 10 in Drehrichtung nachfolgenden Kanalausgang 11 auf. Zwischen dem Kanaleingang 10 und dem Kanalausgang 11 ein von der Kontur 8 ausgehender, sich durch die Hydraulikfördereinrichtung 7 erstreckender Druckkanal 12 ausgebildet ist, so dass im Betrieb der Lageranordnung 1 das Hydraulikfluid 5 über den Druckkanal 12 aus dem Hydrauliksumpf 6 förderbar ist. Der Druckkanal 12 ist im Bereich des Analausgangs 11 angeordnet. Der Kanaleingang 10 und der Kanalausgang 11 liegen im Betrieb der Lageranordnung 1 innerhalb des Hydrauliksumpfs 6.

Der Figur 1 ist auch gut entnehmbar, dass die Hydraulikfördereinrichtung 7 gegenüber der Welle 3 derart kippbar gelagert ist, dass im Betrieb der Lageranordnung 1 der Kanaleingang 10 einen größeren Strömungsquerschnitt aufweisen kann als der Kanalausgang 11. Diese stark außermittige Abstützung der Hydraulikfördereinrichtung 7 sorgt für einen höheren Durchsatz an Hydraulikfluid 5 durch den Hydraulikkanal 9. Diese Verkippbarkeit der Hydraulikfördereinrichtung 7 gegenüber der Welle 3 wird durch ein Federelement 14 realisiert, was einerseits mit der Hydraulikfördereinrichtung 7 und anderseits mit einem zur Welle 3 lagefixiertem Bauteil der Lageranordnung 1 verbunden ist. Die Hydraulikfördereinrichtung 7 ist in radialer Richtung auf die Welle 3 hin gerichtet mittels des Federelements 14 auch federkraftbeaufschlagt. Das Federelement 14 ist in der gezeigten Ausführungsform auf der dem Kanalausgang 11 zugewandten Seite einer Symmetrieachse 15 der Kontur 8 angeordnet, was die Verkippbarkeit entsprechend begünstigt.

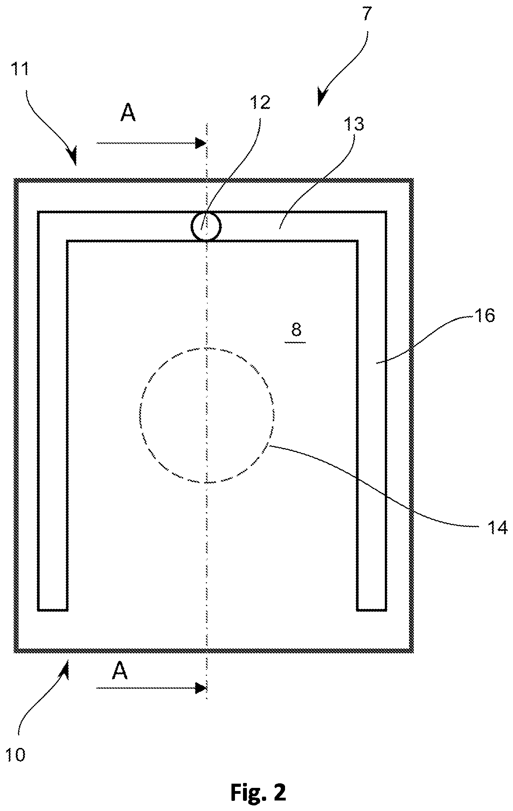

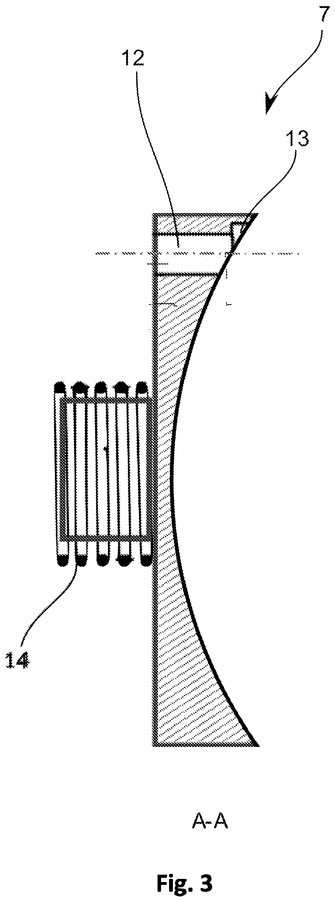

Die Belastung der Hydraulikfördereinrichtung 7 durch das Federelement 14 ist hierbei viel niedriger als bei den "richtigen" Pads eines Gleitlagers und beträgt ca. p_{quer} = 1 MPa, wodurch sich höhere Schmierfilmdicken und folglich auch ein höherer Volumenstrom an Hydraulikfluid 5 durch den Hydraulikkanal 9 realisieren lässt. Die Figur 3 zeigt die aus der Figur 2 bekannte Hydraulikfördereinrichtung 7 in einer freigestellten Längsschnittansicht.

In der Figur 1 ist ferner gezeigt, dass die Hydraulikfördereinrichtung 7 an ihrer Kontur 8 eine sich in Axialrichtung erstreckende erste Nut 13 aufweist, welche hydraulisch mit dem Druckkanal 12 gekoppelt ist. Anhand der Figur 2 lässt sich nun auch erkennen, dass die Hydraulikfördereinrichtung 7 an ihrer Kontur 8 auch zwei sich in Tangentialrichtung erstreckende, parallel verlaufende zweite Nuten 16 aufweist, welche hydraulisch mit der ersten Nut 13 verbunden ist. In der gezeigten Ausführungsform ergibt sich hierdurch eine U-förmige Kanalstruktur an der Kontur 8.

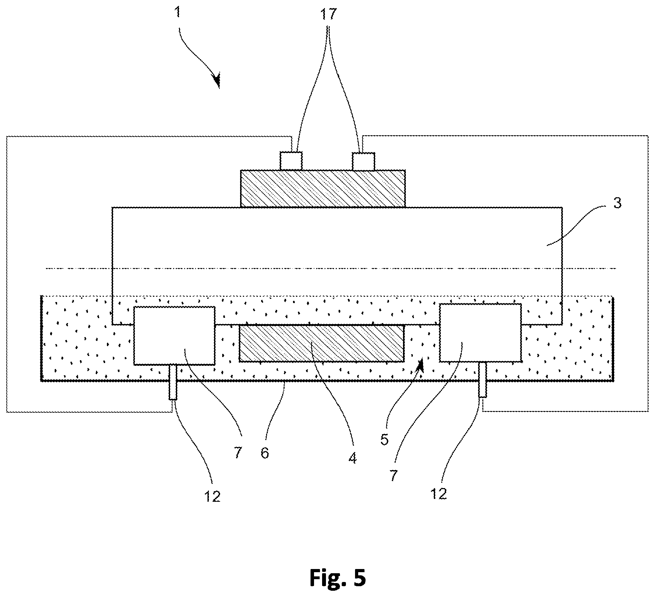

In der Figur 5 ist eine erste Ausführungsform einer Lageranordnung 1 gezeigt, bei der die Lageranordnung 1 zwei axial voneinander beabstandete Hydraulikfördereinrichtungen 7 aufweist. Das erste Lager 4 der Lageranordnung 1 ist hierbei ein Gleitlager, wobei das Gleitlager mittels des aus dem Hydrauliksumpf 6 durch die Hydraulikfördereinrichtungen 7 geförderten Hydraulikfluids 5 geschmiert wird. Das aus dem Hydrauliksumpf 6 geförderte Hydraulikfluid 5 wird direkt zu dem ersten Lager 4 mit einer Eintrittsöffnung 17 in Schwerkraftrichtung oberhalb des Hydrauliksumpfs 6 geleitet.

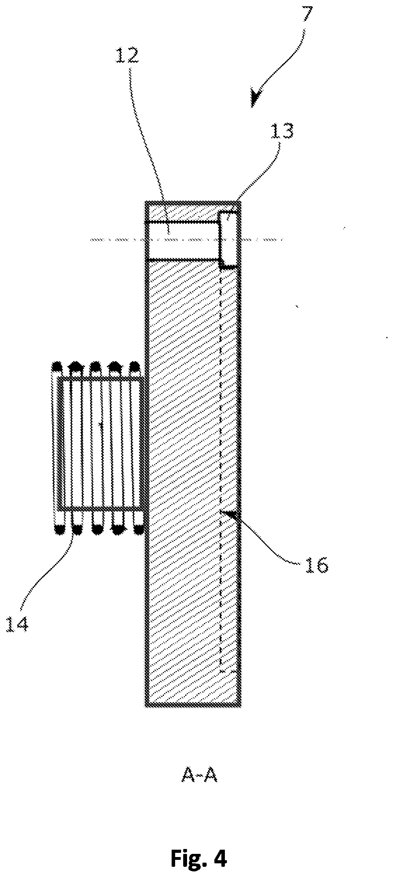

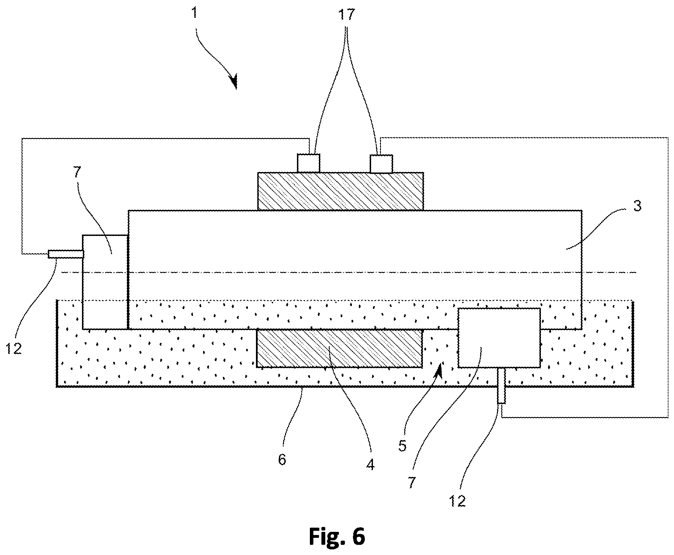

In der Figur 6 ist eine zweite Ausführungsform einer Lageranordnung 1 gezeigt, bei der die Lageranordnung 1 ebenfalls zwei axial voneinander beabstandete Hydraulikfördereinrichtungen 7 aufweist, wobei jedoch die Hydraulikfördereinrichtung 7 in einer Axialkonfiguration mit der Welle 3 zusammenwirkt. Dies wird anhand einer Zusammenschau von Figur 6 mit Figur 4 nachfolgend näher erläutert.

Die gezeigte Lageranordnung 1 umfasst eine Welle 3, welche in wenigstens einem ersten Lager 4 drehbar gelagert ist, wobei die Welle 3 zumindest abschnittsweise in einen mit einem Hydraulikfluid 5 gefüllten Hydrauliksumpf 6 eintaucht. Insoweit ist der Grundaufbau mit dem in der Figur 5 gezeigten Konfiguration identisch.

Innerhalb des Hydrauliksumpfs 6 ist auf der linken Seite endseitigen Stirnseite eine Hydraulikfördereinrichtung 7 angeordnet ist, welche eine im Wesentlichen ebene Kontur 8 aufweist, die mit der linken Stirnseite der im Querschnitt kreisförmigen Welle 3 einen Hydraulikkanal 9 zwischen der Kontur 8 der Hydraulikfördereinrichtung 7 und der im Betrieb in einer Drehrichtung rotierenden Welle 3 ausbildet. Während die Ausführungsform eine im Bezug auf die Welle 3 radial angeordnete Hydraulikfördereinrichtung 7 aufweist, zeigt die Figur 6 also auch eine axial angeordnete Hydraulikfördereinrichtung 7 auf der linken Endseite der Welle 3.

Der Hydraulikkanal 9 besitzt in der gezeigten Axialkonfiguration einen in Drehrichtung der rotierenden Welle 3 liegenden Kanaleingang 10 und einen dem Kanaleingang 10 in Drehrichtung nachfolgenden Kanalausgang 11 aufweist, und zwischen dem Kanaleingang 10 und dem Kanalausgang 11 ein von der Kontur 8 ausgehender, sich durch die Hydraulikfördereinrichtung 7 erstreckender Druckkanal 12 ausgebildet ist, so dass im Betrieb der Lageranordnung 1 das Hydraulikfluid 5 über den Druckkanal 12 aus dem Hydrauliksumpf 6 förderbar ist.

Dabei ist die Hydraulikfördereinrichtung 7 in axialer Richtung auf die Welle 3 hin gerichtet mittels eines Federelements 14 federkraftbeaufschlagt und weist an ihrer Kontur 8 eine sich in Radialrichtung erstreckende erste Nut 13 auf, welche hydraulisch mit dem Druckkanal 12 gekoppelt ist.

Die Erfindung ist nicht auf die in den Figuren dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung 'erste' und 'zweite' Merkmale definieren, so dient diese Bezeichnung der Unterscheidung zweier gleichartiger Merkmale, ohne eine Rangfolge festzulegen.

### Bezugszeichenliste

1 Lageranordnung
2 Windkraftanlage
3 Welle
4 Lager
5 Hydraulikfluid
6 Hydrauliksumpf
7 Hydraulikfördereinrichtung
8 Kontur
9 Hydraulikkanal
10 Kanaleingang
11 Kanalausgang
12 Druckkanal
13 Nut
14 Federelement
15 Symmetrieachse
16 Nut
17 Eintrittsöffnung

## Patentansprüche

1. Lageranordnung (1), insbesondere für eine Windkraftanlage (2), umfassend eine Welle (3), welche in wenigstens einem ersten Lager (4) drehbar gelagert ist, wobei die Welle (3) zumindest abschnittsweise in einen mit einem Hydraulikfluid (5) gefüllten Hydrauliksumpf (6) eintaucht,
**dadurch gekennzeichnet, dass**
innerhalb des Hydrauliksumpfs (6) eine Hydraulikfördereinrichtung (7) angeordnet ist, welche eine im Wesentlichen ebene Kontur (8) aufweist, die mit einer Stirnseite der im Querschnitt kreisförmigen Welle (3) einen Hydraulikkanal (9) zwischen der Kontur (8) der Hydraulikfördereinrichtung (7) und der im Betrieb in einer Drehrichtung rotierenden Welle (3) ausbildet, wobei der Hydraulikkanal (9) einen in Drehrichtung der rotierenden Welle (3) liegenden Kanaleingang (10) und einen dem Kanaleingang (10) in Drehrichtung nachfolgenden Kanalausgang (11) aufweist, und zwischen dem Kanaleingang (10) und dem Kanalausgang (11) ein von der Kontur (8) ausgehender, sich durch die Hydraulikfördereinrichtung (7) erstreckender Druckkanal (12) ausgebildet ist, so dass im Betrieb der Lageranordnung (1) das Hydraulikfluid (5) über den Druckkanal (12) aus dem Hydrauliksumpf (6) förderbar ist.

2. Lageranordnung (1) nach Anspruch 1,
**dadurch gekennzeichnet, dass**
der Druckkanal (12) im Bereich des Kanalausgangs (11) angeordnet ist.

3. Lageranordnung (1) nach einem der vorherigen Ansprüche,
**dadurch gekennzeichnet, dass**
die Hydraulikfördereinrichtung (7) gegenüber der Welle (3) derart kippbar gelagert ist, dass im Betrieb der Lageranordnung (1) der Kanaleingang (10) einen größeren Strömungsquerschnitt aufweisen kann als der Kanalausgang (11).

4. Lageranordnung (1) nach einem der vorherigen Ansprüche,
**dadurch gekennzeichnet, dass**
die Hydraulikfördereinrichtung (7) in radialer Richtung auf die Welle (3) hin gerichtet mittels eines Federelements (14) federkraftbeaufschlagt ist oder die Hydraulikfördereinrichtung (7) in axialer Richtung auf die Welle (3) hin gerichtet mittels eines Federelements (14) federkraftbeaufschlagt ist.

5. Lageranordnung (1) nach Anspruch 3,
**dadurch gekennzeichnet, dass**
das Federelement (14) auf der dem Kanalausgang (11) zugewandten Seite einer Symmetrieachse (15) der Kontur (8) angeordnet ist.

6. Lageranordnung (1) nach einem der vorherigen Ansprüche,
**dadurch gekennzeichnet, dass**
die Hydraulikfördereinrichtung (7) an ihrer Kontur (8) eine sich in Axialrichtung erstreckende erste Nut (13) aufweist, welche hydraulisch mit dem Druckkanal (12) gekoppelt ist oder die Hydraulikfördereinrichtung (7) an ihrer Kontur (8) eine sich in Radialrichtung erstreckende erste Nut (13) aufweist, welche hydraulisch mit dem Druckkanal (12) gekoppelt ist.

7. Lageranordnung (1) nach Anspruch 6,
**dadurch gekennzeichnet, dass**
die Hydraulikfördereinrichtung (7) an ihrer Kontur (8) eine sich in Tangentialrichtung erstreckende zweite Nut (16) aufweist, welche hydraulisch mit der ersten Nut (13) verbunden ist.

8. Lageranordnung (1) nach einem der vorherigen Ansprüche,
**dadurch gekennzeichnet, dass**
der Kanaleingang (10) und der Kanalausgang (11) im Betrieb der Lageranordnung (1) innerhalb des Hydrauliksumpfs (6) liegen.

9. Lageranordnung (1) nach einem der vorherigen Ansprüche,
**dadurch gekennzeichnet, dass**
die Lageranordnung (1) eine Mehrzahl an Hydraulikfördereinrichtungen (7) aufweist.

10. Lageranordnung (1) nach einem der vorherigen Ansprüche,
**dadurch gekennzeichnet, dass**
das erste Lager (4) der Lageranordnung (1) ein Gleitlager ist, wobei das Gleitlager mittels des aus dem Hydrauliksumpf (6) geförderten Hydraulikfluid (5) geschmiert wird.

11. Lageranordnung (1) nach einem der vorherigen Ansprüche,
**dadurch gekennzeichnet, dass**
das aus dem Hydrauliksumpf (6) geförderte Hydraulikfluid (5), insbesondere direkt, zu dem ersten Lager (4) mit einer Eintrittsöffnung (17) in Schwerkraftrichtung oberhalb des Hydrauliksumpfs (6) geleitet wird.

## Claims

1. A bearing assembly (1), in particular for a wind turbine (2), comprising a shaft (3) that is rotatably mounted in at least a first bearing (4), wherein the shaft (3) is immersed at least partially in a hydraulic sump (6) filled with a hydraulic fluid (5),
**characterised in that**
a hydraulic conveying device (7) is arranged within the hydraulic sump (6), which has a substantially planar contour (8) that, together with one end face of the circular-section shaft (3), forms a hydraulic channel (9) between the contour (8) of the hydraulic conveying device (7) and the shaft (3) that rotates in one rotational direction during operation, wherein the hydraulic channel (9) has a channel inlet (10) located in the rotational direction of the rotating shaft (3) and a channel outlet (11) following the channel inlet (10) in the rotational direction, and a pressure channel (12) extending from the contour (8) through the hydraulic conveying device (7) is formed between the channel inlet (10) and the channel outlet (11), so that the hydraulic fluid (5) can be conveyed from the hydraulic sump (6) via the pressure channel (12) during operation of the bearing assembly (1).

2. The bearing assembly (1) according to claim 1,
**characterised in that**
the pressure channel (12) is arranged in the region of the channel outlet (11).

3. The bearing assembly (1) according to any one of the preceding claims,
**characterised in that**
the hydraulic conveying device (7) is mounted so that it can be tilted relative to the shaft (3) such that the channel inlet (10) can have a larger flow cross-section than the channel outlet (11) during operation of the bearing assembly (1).

4. The bearing assembly (1) according to any one of the preceding claims,
**characterised in that**
the hydraulic conveying device (7) is biased in the radial direction towards the shaft (3) by means of a spring element (14) or the hydraulic conveying device (7) is biased in the axial direction towards the shaft (3) by means of a spring element (14).

5. The bearing assembly (1) according to claim 3,
**characterised in that**
the spring element (14) is arranged on the side of an axis of symmetry (15) of the contour (8) facing the channel outlet (11).

6. The bearing assembly (1) according to any one of the preceding claims,
**characterised in that**
the hydraulic conveying device (7) has on its contour (8) a first groove (13) extending in the axial direction, which is hydraulically coupled to the pressure channel (12) or the hydraulic conveying device (7) has on its contour (8) a first groove (13) extending in the radial direction, which is hydraulically coupled to the pressure channel (12).

7. The bearing assembly (1) according to claim 6,
**characterised in that**
the hydraulic conveying device (7) has on its contour (8) a second groove (16) extending in the tangential direction, which is hydraulically connected to the first groove (13).

8. The bearing assembly (1) according to any one of the preceding claims,
**characterised in that**
the channel inlet (10) and the channel outlet (11) are located within the hydraulic sump (6) during operation of the bearing assembly (1).

9. The bearing assembly (1) according to any one of the preceding claims,
**characterised in that**
the bearing assembly (1) has a plurality of hydraulic conveying devices (7).

10. The bearing assembly (1) according to any one of the preceding claims,
**characterised in that**
the first bearing (4) of the bearing assembly (1) is a sliding bearing, wherein the sliding bearing is lubricated by means of the hydraulic fluid (5) supplied from the hydraulic sump (6).

11. The bearing assembly (1) according to any one of the preceding claims,
**characterised in that**
the hydraulic fluid (5) conveyed from the hydraulic sump (6) is directed, in particular directly, to the first bearing (4) via an inlet opening (17) located above the hydraulic sump (6) in the direction of gravity.

## Revendications

1. Ensemble palier (1), en particulier pour une installation éolienne (2), comprenant un arbre (3) qui est monté de manière rotative dans au moins un premier palier (4), l'arbre (3) étant immergé au moins par sections dans un carter hydraulique (6) rempli d'un fluide hydraulique (5),
**caractérisé en ce que**
un dispositif de transport hydraulique (7) est agencé à l'intérieur du carter hydraulique (6), ledit dispositif présentant un contour (8) sensiblement plan qui forme, avec un côté frontal de l'arbre (3) de section transversale circulaire, un canal hydraulique (9) entre le contour (8) du dispositif de transport hydraulique (7) et l'arbre (3) en rotation dans un sens de rotation en fonctionnement, le canal hydraulique (9) présentant une entrée (10) de canal située dans le sens de rotation de l'arbre (3) en rotation et une sortie (11) de canal suivant l'entrée (10) de canal dans le sens de rotation, et entre l'entrée (10) de canal et la sortie (11) de canal, un canal de pression (12) partant du contour (8) et s'étendant à travers le dispositif de transport hydraulique (7) est formé, de telle sorte que, lors du fonctionnement de l'ensemble palier (1), le fluide hydraulique (5) puisse être transporté depuis le carter hydraulique (6) par l'intermédiaire du canal de pression (12).

2. Ensemble palier (1) selon la revendication 1,
**caractérisé en ce que**
le canal de pression (12) est agencé dans la zone de la sortie (11) de canal.

3. Ensemble palier (1) selon l'une quelconque des revendications précédentes,
**caractérisé en ce que**
le dispositif de transport hydraulique (7) est monté de manière à pouvoir être incliné par rapport à l'arbre (3) de telle sorte que, lors du fonctionnement de l'ensemble palier (1), l'entrée (10) de canal puisse présenter une section transversale d'écoulement plus grande que la sortie (11) de canal.

4. Ensemble palier (1) selon l'une quelconque des revendications précédentes,
**caractérisé en ce que**
le dispositif de transport hydraulique (7) est soumis à une force élastique orientée en direction radiale vers l'arbre (3) au moyen d'un élément élastique (14) ou le dispositif de transport hydraulique (7) est soumis à une force élastique orientée en direction axiale vers l'arbre (3) au moyen d'un élément élastique (14).

5. Ensemble palier (1) selon la revendication 3,
**caractérisé en ce que**
l'élément élastique (14) est agencé du côté d'un axe de symétrie (15) du contour (8) faisant face à la sortie (11) de canal.

6. Ensemble palier (1) selon l'une quelconque des revendications précédentes,
**caractérisé en ce que**
le dispositif de transport hydraulique (7) présente, sur son contour (8), une première rainure (13) s'étendant dans la direction axiale, qui est accouplée hydrauliquement au canal de pression (12) ou le dispositif de transport hydraulique (7) présente, sur son contour (8), une première rainure (13) s'étendant dans la direction radiale, qui est accouplée hydrauliquement au canal de pression (12).

7. Ensemble palier (1) selon la revendication 6,
**caractérisé en ce que**
le dispositif de transport hydraulique (7) présente, sur son contour (8), une seconde rainure (16) s'étendant dans la direction tangentielle, qui est reliée hydrauliquement à la première rainure (13).

8. Ensemble palier (1) selon l'une quelconque des revendications précédentes,
**caractérisé en ce que**
l'entrée (10) de canal et la sortie (11) de canal sont situées à l'intérieur du carter hydraulique (6) lors du fonctionnement de l'ensemble palier (1).

9. Ensemble palier (1) selon l'une quelconque des revendications précédentes,
**caractérisé en ce que**
l'ensemble palier (1) présente une pluralité de dispositifs de transport hydraulique (7).

10. Ensemble palier (1) selon l'une quelconque des revendications précédentes,
**caractérisé en ce que**
le premier palier (4) de l'ensemble palier (1) est un palier lisse, le palier lisse étant lubrifié au moyen du fluide hydraulique (5) transporté depuis le carter hydraulique (6).

11. Ensemble palier (1) selon l'une quelconque des revendications précédentes,
**caractérisé en ce que**
le fluide hydraulique (5) transporté depuis le carter hydraulique (6) est dirigé, en particulier directement, vers le premier palier (4) avec une ouverture d'entrée (17) dans le sens de la gravité au-dessus du carter hydraulique (6).
